# EUROPÄISCHE PATENTSCHRIFT

(11) **EP 3 763 182 B1**
(45) Veröffentlichungstag und Bekanntmachung des Hinweises auf die Patenterteilung: **03.05.2023**
(21) Anmeldenummer: 20180086.9
(22) Anmeldetag: 15.06.2020
(51) Int. Cl.: A01B 76/00, A01B 79/00, B60K 37/06

(54) **ADAPTIVE BEDIENVORRICHTUNG**
ADAPTIVE CONTROL DEVICE
DISPOSITIF DE COMMANDE ADAPTATIF

(30) Priorität: 28.06.2019 DE 102019117604
(43) Veröffentlichungstag der Anmeldung: 13.01.2021
(73) Patentinhaber: elobau GmbH & Co. KG, 88299 Leutkirch im Allgäu (DE)
(72) Erfinder: STÖHR, Ingmar, 88317 Aichstetten (DE); SCHEMPP, Timo, 88299 Leutkirch (DE); KAUFMANN, Andreas, 70197 Stuttgart (DE); SCHMID, Markus, 70771 Leinfelden-Echterdingen (DE)
(74) Vertreter: VKK Patentanwälte PartG mbB

(56) Entgegenhaltungen:
- EP-A1- 3 312 041
- EP-A1- 3 616 488
- DE-A1- 10 059 794
- DE-A1-102007 003 734
- DE-U1-202012 006 899
- US-A1- 2018 338 406

## Beschreibung

Die vorliegende Erfindung betrifft eine adaptive Bedienvorrichtung insbesondere für landwirtschaftliche Traktoren.

Traktoren sind insbesondere in der Landwirtschaft, aber auch im Bauwesen und in der Forstwirtschaft essentieller Bestandteil eines jeden Gerätebestands. Traktoren stellen unterschiedliche Antriebe zur Verfügung, sind mobil und haben sich daher als universelles Werkzeug etabliert, mit dem die unterschiedlichsten Arbeitsvorrichtungen betreibbar sind. Hierbei werden unter dem Begriff Arbeitsvorrichtungen neben Geräten wie Holzspaltern, Sägen, Winden, Balkenmähern, Pflügen, Grubbern und ähnlichem auch mit Rädern versehene Arbeitsvorrichtungen wie Ladewagen, Miststreuer, Güllefässer, Futterwagen, Rübenroder, Ballenpressen und andere verstanden.

Wie diese kurze Aufzählung bereits zeigt, muss ein Traktor neben den normalen Bedienelementen - auch als HMI (Human-machine-interface) bezeichnet - für seine Bewegungssteuerung auch eine Vielzahl von Bedienelementen zur Bedienung der jeweiligen Arbeitsvorrichtung aufweisen.

Diese Bedienelemente sind bislang stets den unterschiedlichen Antrieben und Hebewerken zugeordnet und üblicherweise neben dem Fahrersitz in einer Bedienarmablage zusammengefasst. Dieser Bedienbereich weist neben Drehreglern, Tastern und Schaltern üblicherweise auch einen oder mehrere Joysticks als Bedienelemente, aber auch einen Monitor als Anzeigeelement auf. Diese bekannten Bedienelemente steuern unveränderbar bestimmte Einrichtungen des Traktors, beispielsweise die Auf-Ab-Bewegung des Heckhubwerks. Die standardisierten Bedienvorrichtungen des Standes der Technik sind zu grundlegenden, generischen Funktionengruppen zusammengefasst, insbesondere den Funktionengruppen zur Bedienung der Dreipunktaufhängung, der Zapfwelle und selektiver Kontrollventile zur Bedienung hydraulischer Zylinder und Motoren. Ein Bediener sieht sich somit einer Vielzahl von Bedienelementen gegenüber, ohne weiteres bis zu 50, die generisch beschriftet sind. Hat ein Bediener sich nicht gemerkt, wie er die, insbesondere hydraulischen, Antriebe der Arbeitsvorrichtung an den Traktor angeschlossen hat oder übernimmt er von einem anderen Benutzer einen Traktor mit bereits angeschlossener Arbeitsvorrichtung, muss er sich durch eine Vielzahl von Kombinationen durcharbeiten, bevor er die für die Arbeitsvorrichtung relevanten Bedienelemente der Hydraulik ermittelt und auch deren Betätigungsrichtung herausgefunden und sich diese dauerhaft eingeprägt hat. Fehlbedienungen und Zeitverlust sind damit fast zwangsläufig, da man dem generisch beschrifteten Bedienelement der Hydraulik nicht ansieht, ob und welche Funktion der Arbeitsvorrichtung es wie steuert. Es ist auch ohne weiteres normal, dass ein Bedienelement rechts/links bewegt wird, aber eine Funktion auf/ab steuert. Ein Benutzer sieht sich demnach der Schwierigkeit gegenüber, seine Erwartungshaltung nicht kompatibel zur tatsächlichen Bedienung zu finden.

Der Vorteil, dass für einen Bediener alle Bedienelemente einer Funktionengruppe zusammengefasst sind, hat jedoch neben den beschriebenen auch den weiteren Nachteil, dass ggf. ein häufiger Positionswechsel seiner Bedienhand, bzw. seines Bedienarms von Funktionsgruppe zu Funktionsgruppe erforderlich ist.

Aus der DE 196 45 211 A1 ist ein drehbar gelagerter Zylinder mit mehreren verschiedenen Bedienoberflächen bekannt, die durch Drehen des Zylinders einem Benutzer zugänglich gemacht oder aus dessen Einflussbereich weggedreht werden können, wobei jede Bedienoberfläche Bedienelemente aufweist.

Aus der DE 10 2013 001 386 A1 ist eine Bedienvorrichtung bekannt, bestehend aus einem Trägerelement, insbesondere einem drehbar gelagerten Trägerelement, auf dem mehrere Bedienoberflächen mit jeweils darauf angeordneten Funktionselementen vorgesehen sind, welche durch eine Drehung des Trägerelements entweder einem Benutzer zugänglich gemacht oder vor diesem versteckt werden können.

Aus der DE 103 25 850 A1 ist eine Bedienvorrichtung bekannt, bestehend aus einem drehbar gelagerten Zylinder, auf dem mehrere Bedienbereiche mit jeweils darauf angeordneten Bedienelementen vorgesehen sind, wobei durch eine Drehbewegung ein zugänglicher Bedienbereich nicht zugänglich gemacht werden kann, während ein nicht zugänglicher Bedienbereich in eine zugängliche Position versetzt wird.

Aus der EP 0 823 347 A1 ist eine Bedienvorrichtung in Form eines drehbar gelagerten Trägers bekannt, welcher durch einen Aktuator antreibbar und in eine gewünschte Drehposition drehbar ist, wobei in jeder möglichen Drehposition jeweils ein individueller Bedienbereich einem Benutzer zugänglich gemacht wird. Aus der EP3312041 A1 ist eine weitere Bedienvorrichtung bekannt.

Die vorliegende Erfindung stellt sich daher die Aufgabe, diesen Nachteil zu vermeiden und eine entsprechende Vorrichtung anzugeben.

Die Vorrichtungsaufgabe wird gelöst durch eine adaptive Bedienvorrichtung nach Anspruch 1, wobei wenigstens ein Bedienbereich mindestens ein manuell bedienbares Bedienelement aufweist, wobei mindestens eines der Bedienelemente als Joystick auf einem Bedienmodul angeordnet ist, das als ein im Bedienbereich drehbar gelagerter Zylinder ausgebildet ist, wobei die Bedienvorrichtung weiter eine Konfigurationsvorrichtung aufweist, die mittels Änderung der Drehstellung des Bedienmoduls (4) und/oder Änderung der Funktionalität des Bedienelements (3) das mindestens eine Bedienelement (3) derart konfigurierend ist, dass eine Bewegung des Bedienelements (3) zu einer gleichgerichteten Bewegung einer im Benutzungsfall angeschlossenen Arbeitsvorrichtung (9) korrespondierend ist.

Die Erfindung ermöglicht mit großem Vorteil eine an die aktuellen Bedürfnisse eines Benutzers zugeschnittene Funktionalität der Bedienvorrichtung, sodass mit ein und denselben Bedienelementen ganz unterschiedliche Funktionen abrufbar sind. So können Bedienelemente in Form von Knöpfen oder anderen Bedieneinrichtungen in einer Winkelstellung des Zylinders beispielsweise eine Vor/RückwärtsBewegung steuernd sein, während sie in einer davon abweichenden, zweiten Winkelstellung eine Hoch/Runter-Bewegung einer von ihnen zu steuernden Arbeitsvorrichtung bewirkend sind. Im einfachsten Fall besteht die Konfiguration nur darin, das Bedienelement durch Rotation des Zylinders außer Reichweite eines Benutzers zu bringen, die Konfigurationsvorrichtung also in einem Drehantrieb des Zylinders. Die erfindungsgemäße Konfigurationsvorrichtung ist den Zylinder in die gewünschte Drehstellung verbringend und/oder dabei die Funktionalität der Bedienelemente auf dem Zylinder konfigurierend. Mit der Änderung der Drehstellung des Bedienmoduls geht eine Positionsänderung des mindestens einen darauf angeordneten Bedienelements einher, sodass beispielsweise in Relation zum Raum aus einer Hoch/Runter-Bewegung des Bedienelements nach Änderung der Drehstellung eine Vor/ZurückBewegung des Bedienelements wird, wobei die Bewegung des Bedienelements in Relation zum Bedienmodul gleichbleibend ist. Unter der Funktionalität des mindestens einen Bedienelements ist dabei erfindungsgemäß dessen Bewegung zu verstehen, insbesondere in Relation zum Bedienmodul. So kann diese Funktionalität des Bedienelements bei gleicher oder veränderter Drehstellung des Bedienmoduls relativ dazu beispielsweise von einer möglichen Vor/Zurück-Bewegung, bei der eine Seitwärtsbewegung blockiert ist, zu einer ermöglichten Seitwärtsbewegung, bei der eine Vor/ZurückBewegung blockiert ist, geändert werden. Auf diese Weise ist es mit großem Vorteil ermöglicht, einen, mehrere oder alle Bedienelemente eines Zylinders und damit einen Bedienbereich der Adaptiven Bedienvorrichtung passend zu einer zu bedienende Arbeitsvorrichtung zu konfigurieren und diese Konfiguration dem Benutzer mitzuteilen.

Mit besonderem Vorteil ist es so einem Benutzer ermöglicht, ohne wesentliche Änderung der Lage seines Arms oder Handgelenks an ein und derselben Bedieneinheit unterschiedlichste Funktionen je nach zu steuernder Arbeitsvorrichtung umzusetzen.

In Ausgestaltung der Erfindung ist vorgesehen, dass die Drehachse des Zylinders in etwa parallel zu einer Oberfläche des mindestens einen Bedienbereichs orientiert ist. Aus Sicht eines Bedieners ist der Zylinder demnach liegend angeordnet, vorzugsweise so, dass die Drehachse unterhalb oder im Bereich der einem Benutzer zugewandten Oberfläche der Bedienvorrichtung angeordnet ist, mithin im oder am entsprechenden Gehäuse. Weniger bevorzugt aber erfindungsgemäß wäre eine Anordnung der Drehachse oberhalb dieser Oberfläche. Erfindungsgemäß ist dem Benutzer die Mantelfläche des Zylinders zugewandt, insbesondere nur ein Teil derselben. Auf der Mantelfläche sind erfindungsgemäß wenigstens ein, bevorzugt aber mehrere Bedienelemente angeordnet, insbesondere in unterschiedlichen radialen und axialen Positionen des Zylinders, wodurch die Funktionalität dieses erfindungsgemäßen Bedienelements besonders hoch und damit an besonders viele Betriebssituationen anpassbar ist.

In Ausgestaltung der Erfindung ist vorgesehen, dass der mindestens eine Zylinder derart im mindestens einen Bedienbereich angeordnet ist, dass nur ein Teil seiner Mantelfläche von außen zugänglich ist, bzw. einem Benutzer zugänglich ist. Bevorzugt ist dabei ein Teil der Mantelfläche durch den Bedienbereich verdeckt, gegebenenfalls auch durch eine entsprechende Anformung oder Auswölbung eines Gehäuses, das den Bedienbereich tragend ist. Dies hat den Vorteil, dass Bedienelemente dem Zugriff eines Benutzers durch Rotation unter das Gehäuse / die Auswölbung entziehbar sind, wodurch sie gleichzeitig inaktiviert sind. Zum einen ermöglicht dies eine sichere Lagerung des Zylinders, zum anderen reduziert diese Ausgestaltung eine unerwünschte Anhäufung verschiedenster, insbesondere momentan nicht benötigter Bedienelemente des Bedienmoduls im Bedienbereich.

In Ausgestaltung der Erfindung ist vorgesehen, dass je nach Konfiguration wenigstens ein Bedienelement a) in seiner Funktion ein- oder ausschaltbar und/oder b) in seiner räumlichen Lage veränderbar und/oder c) in Richtung und/oder Umfang seiner Bewegung konfigurierbar ist. Dies gilt grundsätzlich für alle Bedienelemente eines Bedienmoduls, ist jedoch bei Joysticks besonders relevant. Hier wäre beispielsweise eine der horizontalen Bewegungsachsen sperr- oder freigebbar, eine Druckfunktion in z-Richtung sperr- oder freigebbar oder das Maß einer Bewegung entlang einer oder beider horizontaler Bewegungsachsen veränderbar, beispielsweise beschränkbar. Zu den genannten Konfigurationen ist erfindungsgemäß auch ein Versenken oder eine anderweitig erreichbare Nicht-Zugänglichkeit des Bedienelements zu rechnen und damit das Ausschalten seiner Funktionalität. Dies reduziert die Anzahl der für einen Benutzer sichtbaren Bedienelemente auf die gerade für die jeweils anstehende Tätigkeit mit einer bestimmten Arbeitsvorrichtung notwendigen und erfüllt damit die intuitive Erwartungshaltung eines Benutzers, wonach eine Rechts/Links-Drehung des Bedienelements auch eine Rechts/Links-Bewegung der Arbeitsvorrichtung auslöst und steuert. Hierzu zählt erfindungsgemäß auch dessen relative Lageveränderung zum Bedienmodul. Dieses kann demnach erfindungsgemäß an ihm ortsfeste Bedienelemente als auch ortsveränderliche Bedienelemente aufweisen, insbesondere ortsveränderlich hinsichtlich einer axialen Lage.

In Ausgestaltung der Erfindung ist vorgesehen, dass das mindestens eine Bedienelement dadurch deaktivierbar ist, dass es durch eine Drehung des Zylinders nicht mehr von außen zugänglich ist, insbesondere hinter oder unter eine Abdeckung. Diese erfindungsgemäße Art der Inaktivierung reduziert wie bereits erwähnt die Anzahl der zugänglichen - und damit verwechselbaren - Bedienelemente und schützt die inaktiven gleichzeitig vor rauen Umwelteinflüssen. Dabei können die Bedienelemente auf dem Zylinder derart angeordnet sein, dass je nach Drehstellung des Zylinders immer nur ein Bedienelement von außen zugänglich ist. Alternativ ist auch eine Ausführungsform erfindungsgemäß, bei der mehr als nur ein Bedienelement auf dem Zylinder bei einer bestimmten Drehstellung von außen zugänglich ist.

In Ausgestaltung der Erfindung ist vorgesehen, dass ein konfigurierbares Bedienelement eine Funktion aufweisend ist, gewählt aus der Gruppe gebildet durch die Grundfunktionen: vor/zurück, rechts/links, hoch/runter, an/aus, offen/zu, mehr/weniger, im oder gegen den Uhrzeigersinn rotieren/schwenken. Diese Aufzählung ist dabei nicht abschließend zu verstehen, beispielsweise könnte eine besondere Arbeitsvorrichtung auch eine besondere andere, hier nicht erwähnte Grundfunktion aufweisen.

In Ausgestaltung der Erfindung ist vorgesehen, dass der mindestens eine Zylinder eine Höhe zwischen 10 mm und 40 mm aufweist, insbesondere eine Höhe zwischen 20 mm und 30 mm. Zylinder in dieser Größe sind ausreichend, um zumindest eine Anzahl an Unterbedienelementen aufzunehmen und gleichzeitig klein genug, um eine möglichst geringe Fläche des Bedienbereichs zu belegen. Derartige Abmessungen sind vorteilhaft, da sie in etwa der Breite eines Fingers eines Benutzers entsprechen. So lassen sich damit besonders gut mehrere nebeneinander angeordnete Zylinder gleichzeitig mit einer Hand bedienen.

In Ausgestaltung der Erfindung ist vorgesehen, dass in dem mindestens einen Bedienbereich mehrere Bedienmodule nebeneinander angeordnet sind, insbesondere mit koaxialen Drehachsen. Dadurch stehen dem Benutzer mehrere Permutationen von Möglichkeiten zur Verfügung, die Bedienelemente eines Bedienbereichs nach seinen Ansprüchen oder den Ansprüchen der Arbeitsmaschine zu konfigurieren, beispielsweise, wenn mehr Unterbedienelemente oder Bedienelemente zur Steuerung einer Arbeitsvorrichtung benötigt werden. Die Drehachsen sind erfindungsgemäß auch nicht koaxial anordnenbar, insbesondere bogenartig, beispielsweise, wenn einer Drehbewegung im Handgelenk eines Bedieners Rechnung getragen werden soll, die dieser ausführen muss, um unterschiedliche Bedienelemente auf unterschiedlichen Bedienmodulen zu bedienen.

In Ausgestaltung der Erfindung ist vorgesehen, dass sie mindestens einen, insbesondere auf dem mindestens einen Zylinder angeordneten Joystick aufweist. Unter Joystick werden erfindungsgemäß auch Mini-Joysticks und insbesondere auch einachsige Daumenräder verstanden. Dadurch lassen sich besonders viele Funktionen in dieses Bedienelement integrieren, da dieses über mehrere Achsen steuernd ist. So kann beispielsweise ein vom Benutzer auf dem Zylinder weggedrehter Joystick eine Oben-/Unten-Bewegung steuernd sein, während der gleiche Joystick, gedreht in eine Position nahe am Benutzer eine Vor-/Rückwärtsbewegung steuernd ist.

In Ausgestaltung der Erfindung ist vorgesehen, dass sie eine Erkennungsvorrichtung aufweist, die die Art einer an einen die Bedienvorrichtung aufweisenden Traktor im Benutzungsfall angekoppelten Arbeitsvorrichtung erkennend ist. Ist der Bedienvorrichtung die Art der angekoppelten Arbeitsvorrichtung bekannt, kann diese bevorzugt automatisch, alternativ auch manuell derart konfiguriert werden, dass die Bedienelemente der Bedienvorrichtung solche Funktionen ausüben können, die für das Betreiben eines Traktors mit der entsprechenden, angekoppelten Arbeitsvorrichtung benötigt werden.

In Ausgestaltung der Erfindung ist vorgesehen, dass die Konfigurationseinrichtung derart mit der Erkennungsvorrichtung zusammenwirkend ist, dass sie die Funktionalität mindestens eines Bedienmoduls und/oder Bedienelements in Abhängigkeit von der Art der angekoppelten Arbeitsvorrichtung konfigurierend ist. So ermöglicht die Erfindung mit großem Vorteil die Verwendung ein und desselben Bedienmoduls zum Ausführen ganz unterschiedlicher Funktionen, deren Art im Benutzungsfall in Abhängigkeit von der jeweils angekoppelten Arbeitsvorrichtung festgelegt werden. So ist es erfindungsgemäß einem Benutzer ermöglicht, mit ein und demselben Bedienelement - bzw. ein und denselben Bedienelementen - eines Bedienmoduls bei einer Arbeitsvorrichtung ein Fronthubwerk anzuheben/abzusenken, bei einer anderen Arbeitsvorrichtung den Kratzboden vor/zurück laufen zu lassen oder bei einer dritten Arbeitsvorrichtung ein Gestänge nach unten/oben zu klappen. Hierfür erforderlich ist die erfindungsgemäße Erkennungsvorrichtung, die im einfachsten Fall eine Dateneingabeeinheit ist, der ein Benutzer selber beispielsweise mittels Tastatur, Sprachbefehl, Touchscreen mitteilt, welche Arbeitsvorrichtung angekoppelt ist. Die Erkennungsvorrichtung kann erfindungsgemäß auch eine Schnittstelle sein, durch die die Vorrichtung die entsprechende Information erhält, beispielsweise von einem internen Kommunikationsbus des Traktors und damit von einem anderen Steuergerät.

Hierzu kann die Vorrichtung erfindungsgemäß eine Datenbank aufweisen, in der die entsprechenden Daten der einzelnen Arbeitsvorrichtungen hinterlegt sind und auf die die Vorrichtung zur Zuweisung zugreift. Die Datenbank sowie entsprechende Rechner und Datenerfassungseinheiten sind ebenfalls Teil der erfindungsgemäßen Vorrichtung. Zu dieser Datenbank gehören entsprechend auch ein oder mehrere Datenerfassungsmodule, insbesondere in Form einer Eingabeeinheit, die entweder automatisch die Arbeitsvorrichtung erkennt, oder bei der manuell eine Dateneingabe erfolgt, beispielsweise in Form einer Auswahl der Arbeitsvorrichtung aus einer Tabelle oder Übersicht. Wie bereits geschildert, können die benötigten Informationen auch über ein Bussystem der Arbeitsvorrichtung selber oder des Traktors mitgeteilt werden, so dass die Erkennungsvorrichtung eine Datenschnittstelle ist, die gleichzeitig auch ein Datenerfassungsmodul ist. In diesem Fall wären Eingabeeinheit und ggf. andere Steuergeräte mehr dem Traktor oder der Arbeitsvorrichtung zuzuordnen, als der Bedieneinheit.

In Ausgestaltung der Erfindung ist vorgesehen, dass ein erster Bedienbereich so konfiguriert ist, dass dessen mindestens eines Bedienelement die arbeitsvorrichtungstypisch am häufigsten anfallenden Bedienbewegungen steuernd ist und dass ein zweiter und jeder weitere Bedienbereich so konfiguriert sind, dass dessen jeweilige eine oder mehrere Bedienelemente die arbeitsvorrichtungstypisch am zweithäufigsten, dritthäufigsten, n-häufigsten anfallenden Bedienbewegungen steuernd sind. Mit ganz großem Vorteil ermöglicht die Erfindung damit, die häufigsten Bedienfunktionen einer Arbeitsvorrichtung in einem Bedienbereich zu konzentrieren, der einer Ruhelage eines Bedienerarms am nächsten liegt, bzw. in der Ruhelage angeordnet ist. Bei einem Pflug als Arbeitsvorrichtung wäre dies beispielsweise eine Auf- und Abbewegung des Heckhubwerks. Eine zweithäufigste Bedienfunktion wäre beispielsweise das Ändern der Arbeitsbreite oder der Vorderfurchenbreite des Kehrpfluges. Da derartige Funktionen während eines Arbeitsganges jedoch seltener auszuführen sind, ergibt sich insgesamt eine hohe Ergonomie für einen Benutzer. Dies ist immer dann besonders wichtig, wenn dieser für einen langen Zeitraum, insbesondere für mehrere Stunden mit der Arbeitsvorrichtung arbeiten muss. Derartige Fälle treten zum Beispiel sehr häufig bei landwirtschaftlichen Lohnunternehmen auf, deren Traktorfahrer ganze Arbeitstage beispielsweise mit Bodenbearbeitung oder der Übernahme von geernteten Mais, Getreide, Raps, Gras, etc. von Mähdreschern oder Feldhäckslern in ihre angehängten Ladewagen und deren Abfuhr beschäftigt sind.

Weist jeder Bedienbereich ein Anzeigeelement auf, so ist dem Benutzer einfach und deutlich signalisiert, welche Funktionen gerade den Bedienelementen zugeordnet sind. Anstelle eines großen Anzeigeelements, wie es ein üblicherweise vorhandener großer Bildschirm darstellt, sind erfindungsgemäß auch kleine, insbesondere LED-basierte, nicht berührungsempfindliche Bildschirme. Dies hat den Vorteil, dass das Bedienelement nun anstelle einer generischen Funktionsbeschreibung je nach Arbeitsvorrichtung mit "Senken/Heben Mähwerk" oder "Sämaschinengebläse ein/aus" beschriftet ist.

Mit großem Vorteil ordnet die Erfindung nicht länger den Bedienelementen fest bestimmten Traktorfunktionen, sondern eine Primär-, Sekundär- oder Tertiärfunktion eines Arbeitsgeräts zu, unabhängig davon, durch welche Traktorfunktion diese erreicht werden. Ein und dasselbe Bedienelement kann daher erfindungsgemäß durch Umkonfiguration zeitlich nacheinander und in Abhängigkeit von der Arbeitsvorrichtung ganz unterschiedliche Traktorfunktionen steuern. Ein und dasselbe Bedienelement steuert demnach erfindungsgemäß beispielsweise mal das Heckhubwerk, mal die Zapfwelle, mal ein Hydraulikventil und ist mal ohne Funktion.

Sind die Bedienbereiche als benachbarte, insbesondere kreissegmentartige, Bereiche ausgebildet, insbesondere derart, dass sie für einen Benutzer im Benutzungsfall durch Rotation im Ellenbogengelenk und/oder Handgelenk bedienbar erreichbar angeordnet sind, so wird mit großem Vorteil eine besonders ergonomische Bedienung erreicht. Die erfindungsgemäße kreissegmentartige Anordnung bedeutet dabei nicht nur eine Anordnung im streng mathematischen Sinne, erfasst sind alle, auch ovale, elliptische oder allgemein krumme Anordnungen der Bedienbereiche, sofern diese über eine überwiegende Rotations-/Schwenkbewegung eines Benutzerarms für dessen Finger erreichbar sind.

In Weiterbildung der Erfindung ist vorgesehen, dass der erste Bedienbereich, insbesondere dessen Bedienelement, von einer nicht rotierten Position eines Bedienerarms aus bedienbar erreichbar ist und/oder dass zweite, dritte oder weitere Bedienbereiche mit jeweils stärkerer Rotation bedienbar erreichbar ausgebildet sind.

Ebenfalls ist ein Verfahren zur Adaption einer erfindungsgemäßen Bedienvorrichtung vorgesehen, aufweisend die Schritte: a) Identifikation einer angekoppelten Arbeitsvorrichtung und/oder der Stellung eines oder mehrerer Bedienelemente eines insbesondere zylinderförmigen Bedienmoduls mittels einer Erkennungsvorrichtung, b) Auswahl der für die angekoppelte Arbeitsvorrichtung benötigten Bedienfunktionen aus einer Gruppe von für jede Arbeitsvorrichtung hinterlegten Grundfunktionen, c) Hierarchisieren der ausgewählten Bedienfunktionen nach Anwendungshäufigkeit und d) Zuordnen der anwendungshäufigsten Bedienfunktion an das mindestens eine Bedienelement des wenigstens einen Bedienmoduls des ersten Bedienbereichs sowie der absteigend anwendungshäufigsten weiteren Bedienfunktionen an die jeweils nach stärkerer Rotation bedienbar erreichbaren Bedienbereiche.

Diese Schritte sind nicht zwingend sukzessiv und unmittelbar aufeinanderfolgend in dieser Reihenfolge auszuführen, erfindungsgemäß können auch einige davon parallel oder in invertierter Reihenfolge erfolgen oder von anderen, noch nicht erwähnten Verfahrensschritten gefolgt sein. Hierbei steht vorzugsweise jedoch stets die Identifikation an erster Stelle der Verfahrensschritte. Diese kann erfindungsgemäß manuell durch eine irgendwie geartete Eingabe oder Auswahl aus einer angezeigten Liste von Arbeitsvorrichtungen erfolgen oder automatisch durch beispielsweise ein RFID-Tag oder andere Kommunikationsmöglichkeiten zwischen Arbeitsgerät und Bedienvorrichtung. Die Erkennung der Zylinderstellung erfolgt vorzugsweise über interne, insbesondere kabelgebundene Kommunikation.

Gemäß einem weiteren Schritt des erfindungsgemäßen Verfahrens wird eine Anzahl von für die erkannte Arbeitsvorrichtung benötigten Grundfunktionen ausgewählt, beispielsweise Heben-Senken-Rotieren im Fall eines Pfluges, und entsprechend ihrer Häufigkeit im Benutzungsfall hierarchisiert. Hierfür greift das erfindungsgemäße Verfahren auf eine zuvor erstellte Datenbank zurück, die für sämtliche Typen von Arbeitsvorrichtungen die jeweiligen Funktionen und deren Häufigkeiten beim Einsatz der Arbeitsvorrichtung enthält. Vor der Anwendung des erfindungsgemäßen Verfahrens sind daher die Schritte des Ermittelns dieser Funktionen und deren Häufigkeit durchzuführen, wobei letzteres deutlich aufwendiger ist. Diese Daten sind in einer Datenbank hinterlegt, auf die das Verfahren zurückgreift.

In Weiterbildung des Verfahrens ist vorgesehen, dass die Bedienelemente in Abhängigkeit der zugeordneten Bedienfunktion verändert werden in ihren Freiheitsgraden, im Maß ihrer Auslenkung, in der für eine Auslenkung benötigten Kraft, in ihrer Betriebsbereitschaft, in ihrer Lage im jeweiligen Bedienbereich. Die Vorteile wurden bereits geschildert. Schließlich ist in Weiterbildung noch vorgesehen, dass in oder nach Schritt d) die einem Bedienelement zugeordnete Funktion auf einer Anzeige angezeigt wird.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Fig. 1:: eine schematische Darstellung einer erfindungsgemäßen adaptiven Bedienvorrichtung und
- Fig. 2:: ein Schnittbild eines erfindungsgemäßen Zylinders mit Joystick in drei verschiedenen Drehstellungen.

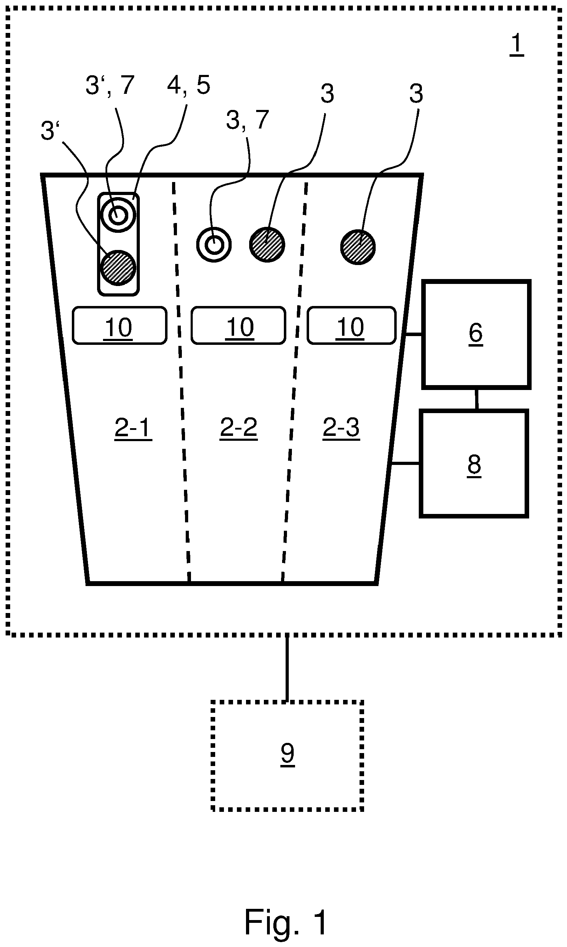

**Fig. 1** zeigt eine schematische Darstellung einer erfindungsgemäßen adaptiven Bedienvorrichtung 1. Die Bedienvorrichtung 1 umfasst im Wesentlichen mehrere Bedienbereiche 2-1, 2-2, 2-3, eine Erkennungsvorrichtung 8 und eine Konfigurationsvorrichtung 6. In den verschiedenen Bedienbereichen 2-1, 2-2, 2-3 sind verschiedenste Anordnungen von Bedienelementen 3 möglich, welche in dem vorliegenden Ausführungsbeispiel in Form von einfachen Knöpfen oder Joysticks 7 ausgeführt sind. Daneben sind erfindungsgemäße Bedienmodule 4 vorgesehen, welche insbesondere in Form von Zylindern 5 ausgebildet sind, und die jeweils wenigstens ein Bedienelement 3' tragend sind. Die Bedienelemente 3' eines Bedienmoduls 4 sind erfindungsgemäß Taster, Schalter, Daumenräder, Joysticks oder anderes mehr. Die Bedienelemente 3 und 3' können auch identisch ausgebildet sein und sich nur in ihrer Anordnung auf einem Bedienmodul 4 bzw. dem Bedienelement 2-n unterscheiden. Weiter ist in jedem Bedienbereich 2 ein Anzeigefeld 10 angeordnet, anhand dessen die aktuelle Konfiguration des Bedienbereichs 2 oder speziell der in dem jeweiligen Bedienbereich 2 befindlichen Bedienelemente 3, insbesondere auf einem Bedienmodul 4 angeordnete Bedienelemente 3' erkennbar ist. Die Konfiguration wird durch die mit den Bedienbereichen 2 kommunizierende Konfigurationsvorrichtung 6 auf die Bedienbereiche 2 angewandt. Die Konfiguration kann durch eine manuelle oder automatische Eingabe erfolgen. In der gezeigten Ausführungsform weist die Bedienvorrichtung 1 eine Erkennungsvorrichtung 8 auf, welche an den Traktor, der die Bedienvorrichtung 1 aufweist, angeschlossene Arbeitsvorrichtungen 9 erkennend ist. Dazu kommuniziert die Erkennungsvorrichtung 8 mit der Konfigurationsvorrichtung 6, sodass die Information des Typs der an den Traktor angeschlossenen Arbeitsvorrichtung 9 die durch die Konfigurationsvorrichtung 6 durchgeführte Konfiguration der Bedienbereiche 2 und Bedienelemente 3 und 3' bestimmend ist. Entsprechend werden die besagten Elemente derart konfiguriert, dass diese Funktionen ausüben, die für die Steuerung der angeschlossenen Arbeitsvorrichtung 9 relevant sind. Es ist wichtig hervorzuheben, dass auch ein Bedienmodul 4 alleine mit mindestens einem Bedienelement 3' erfindungsgemäß ist, solange dessen wenigstens eine Bedienelement 3' in seiner Funktionalität wie beschrieben veränderbar ist.

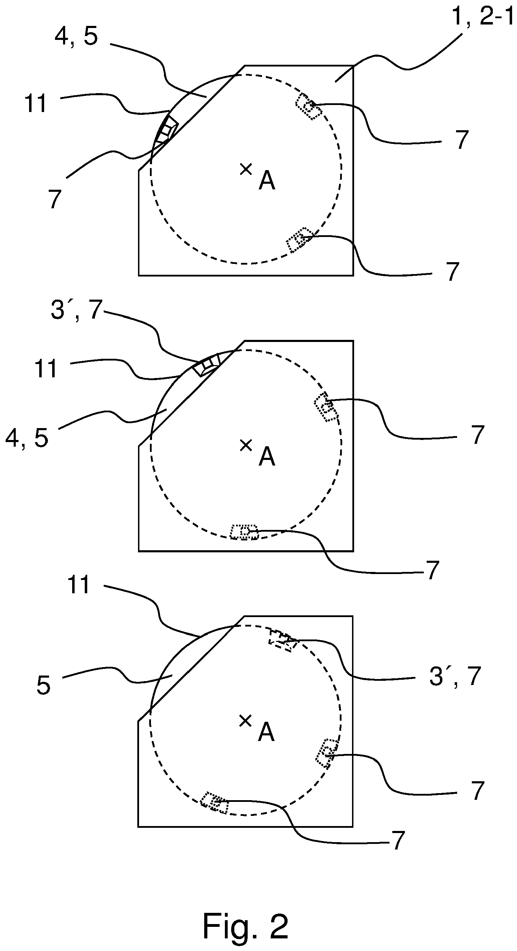

**Fig. 2** zeigt ein Schnittbild eines erfindungsgemäßen Zylinders 5 mit einem Bedienelement 3' - hier einem Joystick 7 - in drei verschiedenen Drehstellungen innerhalb eines mit einem fünfeckigen Körpers angedeuteten Gehäuses, das gleichzeitig für die adaptive Bedienvorrichtung 1 als Ganzes und ein Bedienbereich 2-1 im speziellen steht. Die nicht von außen sichtbaren und/oder zugänglichen Umfangsabschnitte des Zylinders 5 sind gestrichelt dargestellt. Ebenso gestrichelt dargestellt sind die anderen Bedienelemente 3', die auf dem Bedienmodul 4 in dieser axialen Schnittebene angeordnet sind. Die Drehachse A des Zylinders 5 ist bei dieser Darstellung die Darstellungsebene orthogonal schneidend, eine Benutzerhand läge oben auf dem Gehäuse, seine Finger würden der Krümmung des Zylinders 5, insbesondere der Mantelfläche 11 des Zylinders 5 folgen. Nicht dargestellt ist eine erfindungsgemäße Ausführungsform, bei der zwei Bedienelemente 3' gleichzeitig zugänglich wären.

Bei der oben abgebildeten ersten Drehstellung des Zylinders 5 ist der Joystick 7 auf einer ersten, unteren Position, abgebildet, insbesondere einer Position nahe den Fingerspitzen einer entsprechend gebogenen Benutzerhand. In dieser Position ist der Joystick 7 eine erste Bedienfunktion der Arbeitsvorrichtung ausführend.

In der zweiten, in der Mitte abgebildeten, Drehstellung des Zylinders 5 befindet sich der Joystick 7 auf einer zweiten, oberen Position, insbesondere einer Position, die dichter an einem Handgelenk eines Benutzers ist als die zuvor beschriebene. Auf dieser, zur ersten Position unterschiedlichen, zweiten Position ist der Joystick 7 eine zweite Funktion steuernd, welche sich von der ersten Funktion unterscheidet, bzw. unterscheiden kann.

In der dritten gezeigten Position ist der Joystick 7 dem Benutzer nicht zugänglich, der Joystick 7 ist in ein Gehäuseinneres der Bedienvorrichtung gedreht. Vorzugsweise wird der Joystick 7 in einer derartigen, dem Benutzer nicht zugänglichen Position abgeschaltet. Dabei ist es erfindungsgemäß gleichgültig, an welcher exakten Position sich der Joystick 7 im Gehäuseinneren befindet. Die erste Funktion kann aufgrund der weitestgehend vertikalen Stellung des Joysticks 7 eine Hoch-/Runterbewegung sein, während die zweite Funktion aufgrund der eher waagerechten Stellung des Joysticks 7 eine Vor-/Zurückbewegung sein kann. Dabei sind auch andere Funktionen und andere Konstellationen von Bedienelement, Drehstellung des Zylinders 4 und Funktion erfindungsgemäß, insbesondere solche Konstellationen, die für die am Traktor angeschlossenen Arbeitsvorrichtung am sinnvollsten erscheinen.

### BEZUGSZEICHENLISTE

- 1: Adaptive Bedienvorrichtung
- 2: Bedienbereich
- 3: Bedienelement
- 4: Bedienmodul
- 5: Zylinder
- 6: Konfigurationsvorrichtung
- 7: Joystick
- 8: Erkennungsvorrichtung
- 9: Arbeitsvorrichtung
- 10: Anzeigefeld
- 11: Mantelfläche

## Patentansprüche

1. Adaptive Bedienvorrichtung (1), aufweisend mindestens einen Bedienbereich (2), wobei wenigstens ein Bedienbereich (2) mindestens ein manuell bedienbares Bedienelement (3) aufweist, **dadurch gekennzeichnet, dass** mindestens eines der Bedienelemente (3) als Joystick ausgestaltet und auf einem Bedienmodul (4) angeordnet ist, das als ein im Bedienbereich (2) drehbar gelagerter Zylinder (5) ausgebildet ist, wobei die Bedienvorrichtung (1) weiter eine Konfigurationsvorrichtung (6) aufweist, die mittels Änderung der Drehstellung des Bedienmoduls (4) und/oder Änderung der Funktionalität des Bedienelements (3) das mindestens eine Bedienelement (3) derart konfigurierend ist, dass eine Bewegung des Bedienelements (3) zu einer gleichgerichteten Bewegung einer im Benutzungsfall angeschlossenen Arbeitsvorrichtung (9) korrespondierend ist.

2. Adaptive Bedienvorrichtung (1) gemäß Anspruch 1, **dadurch gekennzeichnet, dass** die Drehachse des Zylinders (5) in etwa parallel zu einer Oberfläche des mindestens einen Bedienbereichs (2) orientiert ist.

3. Adaptive Bedienvorrichtung (1) gemäß Anspruch 1, **dadurch gekennzeichnet, dass** der mindestens eine Zylinder (5) derart im mindestens einen Bedienbereich (2) angeordnet ist, dass nur ein Teil seiner Mantelfläche (11) von außen zugänglich ist.

4. Adaptive Bedienvorrichtung (1) gemäß einem der vorherigen Ansprüche **dadurch gekennzeichnet, dass** je nach Konfiguration wenigstens ein Bedienelement (3) a) in seiner Funktion ein- oder ausschaltbar und/oder b) in seiner räumlichen Lage veränderbar und/oder c) in Richtung und/oder Umfang seiner Bewegung konfigurierbar ist.

5. Adaptive Bedienvorrichtung (1) gemäß Anspruch 1, **dadurch gekennzeichnet, dass** das mindestens eine Bedienelement (3) dadurch deaktivierbar ist, dass es durch eine Drehung des Zylinders (5), nicht mehr von außen zugänglich ist.

6. Adaptive Bedienvorrichtung (1) gemäß einem der vorherigen Ansprüche, **dadurch gekennzeichnet, dass** ein konfigurierbares Bedienelement (3) eine Funktion aufweisend ist, gewählt aus der Gruppe gebildet durch die Grundfunktionen: vor/zurück, rechts/links, hoch/runter, an/aus, offen/zu, mehr/weniger, im oder gegen den Uhrzeigersinn rotieren/schwenken.

7. Adaptive Bedienvorrichtung (1) gemäß einem der vorherigen Ansprüche **dadurch gekennzeichnet, dass** der mindestens eine Zylinder (5) eine Höhe zwischen 10 mm und 40 mm aufweist, insbesondere eine Höhe zwischen 20 mm und 30 mm.

8. Adaptive Bedienvorrichtung (1) gemäß einem der vorherigen Ansprüche **dadurch gekennzeichnet, dass** in dem mindestens einen Bedienbereich (2) mehrere Zylinder (5) nebeneinander angeordnet sind, insbesondere mit koaxialer Drehachse.

9. Adaptive Bedienvorrichtung (1) gemäß einem der vorherigen Ansprüche **dadurch gekennzeichnet, dass** sie mindestens einen, insbesondere auf dem mindestens einen Zylinder (5) angeordneten, Joystick (7) aufweist.

10. Adaptive Bedienvorrichtung (1) gemäß Anspruch 1, **dadurch gekennzeichnet, dass** sie eine Erkennungsvorrichtung (8) aufweist, die die Art einer an einen, die Bedienvorrichtung (1) aufweisenden Traktor im Benutzungsfall angekoppelten Arbeitsvorrichtung (9) erkennend ist.

11. Adaptive Bedienvorrichtung (1) gemäß Anspruch 1 oder 2, **dadurch gekennzeichnet, dass** die Konfigurationseinrichtung (6) derart mit der Erkennungsvorrichtung (8) zusammenwirkend ist, dass sie die Funktionalität mindestens eines Bedienbereiches (2) und/oder mindestens eines Bedienelements (3) in Abhängigkeit von der Art der angekoppelten Arbeitsvorrichtung (9) konfigurierend ist.

## Claims

1. Adaptive control device (1), having at least one control area (2), wherein at least one control area (2) has at least one manually operated control element (3), **characterized in that** at least one of the control elements (3) is designed as a joystick and is arranged on a control module (4), which is designed as a cylinder (5) rotatably mounted in the control area (2), wherein the control device (1) further has a configuration device (6), which, by changing the rotational position of the control module (4) and/or changing the functionality of the control element (3), configures the at least one control element (3) in such a way that a movement of the control element (3) corresponds to a movement in the same direction of a working device (9) connected in the event of use.

2. Adaptive control device (1) according to Claim 1, **characterized in that** the axis of rotation of the cylinder (5) is oriented approximately parallel to a surface of the at least one control area (2).

3. Adaptive control device (1) according to Claim 1, **characterized in that** the at least one cylinder (5) is arranged in the at least one control area (2) in such a way that only part of its outer surface (11) is accessible from the outside.

4. Adaptive control device (1) according to one of the preceding claims, **characterized in that**, depending on the configuration, at least one control element (3) a) can be switched on or off in its function and/or b) can be altered in its spatial position and/or c) can be configured in the direction and/or scope of its movement.

5. Adaptive control device (1) according to Claim 1, **characterized in that** the at least one control element (3) can be deactivated **in that** it is no longer accessible from the outside by rotating the cylinder (5) .

6. Adaptive control device (1) according to one of the preceding claims, **characterized in that** a configurable control element (3) has a function selected from the group made up of the basis functions: forward/backward, right/left, up/down, on/off, open/closed, more/less, rotate/pivot clockwise/anticlockwise.

7. Adaptive control device (1) according to one of the preceding claims, **characterized in that** the at least one cylinder (5) has a height between 10 mm and 40 mm, in particular a height between 20 mm and 30 mm.

8. Adaptive control device (1) according to one of the preceding claims, **characterized in that** a plurality of cylinders (5) are arranged next to one another in the at least one control area (2), in particular with a coaxial axis of rotation.

9. Adaptive control device (1) according to one of the preceding claims, **characterized in that** it has at least one joystick (7) arranged in particular on the at least one cylinder (5).

10. Adaptive control device (1) according to Claim 1, **characterized in that** it has a detection device (8), which detects the type of working device (9) coupled to a tractor having the control device (1) in the event of use.

11. Adaptive control device (1) according to Claim 1 or 2, **characterized in that** the configuration device (6) interacts with the detection device (8) in such a way that it configures the functionality of at least one control area (2) and/or at least one control element (3) depending on the type of coupled working device (9) .

## Revendications

1. Dispositif de commande adaptatif (1), comportant au moins une zone de commande (2), dans lequel au moins une zone de commande (2) présente au moins un élément de commande actionnable manuellement (3), **caractérisé en ce qu'**au moins un des éléments de commande (3) est réalisé sous la forme d'un joystick et est disposé sur un module de commande (4) qui est réalisé sous la forme d'un cylindre (5) monté rotativement dans la zone de commande (2), dans lequel le dispositif de commande (1) présente en outre un dispositif de configuration (6), en modifiant la position de rotation du module de commande (4) et/ou modifiant la fonctionnalité de l'élément de commande (3), le au moins un élément de commande (3) est configuré de telle sorte qu'un mouvement de l'élément de commande (3) soit correspondant à un mouvement dans le même sens d'un dispositif de travail (9) branché dans un cas d'utilisation.

2. Dispositif de commande adaptatif (1) selon la revendication 1, **caractérisé en ce que** l'axe de rotation du cylindre (5) est orienté approximativement parallèlement à une surface de la au moins une zone d'actionnement (2).

3. Dispositif de commande adaptatif (1) selon la revendication 1, **caractérisé en ce que** le au moins un cylindre (5) est agencé dans au moins une zone d'actionnement (2) de telle sorte que seule une partie de sa surface latérale (11) soit accessible depuis l'extérieur.

4. Dispositif de commande adaptatif (1) selon une quelconque des revendications précédentes, **caractérisé en ce que**, selon la configuration, au moins un élément de commande (3) a) peut être activé ou désactivé en fonction de sa fonction et/ou b) peut être modifié dans sa position spatiale et/ou c) est configurable dans la direction et/ou l'étendue de son mouvement.

5. Dispositif de fonctionnement adaptatif (1) selon la revendication 1, **caractérisé en ce que** le au moins un élément de commande (3) peut être désactivé en ce sens qu'il n'est plus accessible de l'extérieur par rotation du cylindre (5).

6. Dispositif de commande adaptatif (1) selon une quelconque des revendications précédentes, **caractérisé en ce qu'**un élément de commande configurable (3) a une fonction choisie parmi les groupes formés par les fonctions de base : avant/arrière, gauche/droite, haut/bas, marche/arrêt, ouvrir/fermer, plus/moins, tourner/pivoter dans le sens des aiguilles d'une montre ou dans le sens inverse des aiguilles d'une montre.

7. Dispositif de commande adaptatif (1) selon une quelconque des revendications précédentes, **caractérisé en ce que** au moins un cylindre (5) présente une hauteur comprise entre 10 mm et 40 mm, notamment une hauteur comprise entre 20 mm et 30 mm.

8. Dispositif de commande adaptatif (1) selon une des revendications précédentes, **caractérisé en ce que** dans la au moins une zone d'actionnement (2) plusieurs cylindres (5) sont agencés les uns à côté des autres, notamment avec un axe de rotation coaxial.

9. Dispositif de commande adaptatif (1) selon une des revendications précédentes, **caractérisé en ce qu'**il comporte au moins un joystick (7), notamment disposée sur le au moins un cylindre (5).

10. Dispositif de commande adaptatif (1) selon la revendication 1, **caractérisé en ce qu'**il comprend un dispositif de reconnaissance (8), qui est du type reconnaissant un dispositif de travail (9) attelé à un tracteur présentant le dispositif de commande (1).

11. Dispositif de commande adaptatif (1) selon la revendication 1 ou 2, **caractérisé en ce que** le dispositif de configuration (6) coopère avec le dispositif de reconnaissance (8) de telle sorte qu'il configure la fonctionnalité d'au moins une zone de commande (2) et/ou d'au moins un élément de commande (3) en fonction du type de dispositif de travail (9) attelé.
